# EUROPÄISCHE PATENTANMELDUNG

(11) **EP 3 385 547 A1**
(43) Veröffentlichungstag der Anmeldung: **10.10.2018**
(21) Anmeldenummer: 17165154.0
(22) Anmeldetag: 06.04.2017
(51) Int. Cl.: F16B 13/00

(54) **VERKLEBTE DÄMPFERHÜLSE**

(71) Anmelder: HILTI Aktiengesellschaft, 9494 Schaan (LI)
(72) Erfinder: Nguyen, Huu Toan, 9453 Eichberg (CH)
(74) Vertreter: Hilti Aktiengesellschaft Corporate Intellectual Property

(57) **Zusammenfassung**

Die Erfindung betrifft ein Verfahren zum Installieren eines Ankers zum Befestigen eines Anbauteils an einem Basisteil, bei dem ein Ankerbolzen des Ankers in einem im Basisteil vorgesehenen Loch und in einem im Anbauteil vorgesehenen Durchgangsloch angeordnet wird, und eine Dämpferhülse so am Ankerbolzen angeordnet wird, dass die Dämpferhülse den Ankerbolzen umgibt. Erfindungsgemäss ist vorgesehen, dass die Dämpferhülse mittels Klebstoff mit dem Anbauteil verklebt wird. Die Erfindung betriff auch eine Einheit, insbesondere zur Verwendung in einem solchen Verfahren, aufweisend eine Dämpferhülse und zumindest ein an der Dämpferhülse fixiertes Klebstoffreservoir, welches Klebstoff enthält.

## Beschreibung

Die Erfindung betrifft ein Verfahren zum Installieren eines Ankers zum Befestigen eines Anbauteils an einem Basisteil, bei dem ein Ankerbolzen des Ankers in einem im Basisteil vorgesehenen Loch und in einem im Anbauteil vorgesehenen Durchgangsloch angeordnet wird, und eine Dämpferhülse so am Ankerbolzen angeordnet wird, dass die Dämpferhülse den Ankerbolzen umgibt. Die Erfindung betriff auch eine Einheit, insbesondere zur Verwendung in einem solchen Verfahren, aufweisend eine Dämpferhülse und zumindest ein an der Dämpferhülse fixiertes Klebstoffreservoir, welches Klebstoff enthält.

Aus der DE102008063580 A1 sind Dämpferhülsen für Ankerbolzen mit Elastomerelementen bekannt, welche in das zu befestigende Anbauteil eingelassen werden, und welche schockartige Querbeanspruchungen dämpfen sollen, wie sie beispielsweise bei Erdbeben vorkommen können. Weitere Dämpferhülsen sind aus der DE102007032313 A1 bekannt, wobei diese Dämpferhülsen zusätzlich zu den Elastomerelementen Elemente für eine plastische Deformation aufweisen.

Ferner ist bekannt, den Ringspalt, der um den Ankerbolzen eines in einem Loch verankerten Ankers gebildet ist, mit einer aushärtbaren Masse zu verfüllen. Hierdurch kann der Anker in radialer Richtung abgestützt werden, was die Lastwerte, insbesondere bei dynamischer Belastung und/oder zyklischer Belastung im gerissenen Beton, verbessern kann. Gemäss DE10204591 A1 erfolgt das Verfüllen des Ringspalts von der Mitte des Lochs her, nämlich durch einen im Ankerbolzen gebildeten Füllkanal. Gemäss DE10111470 A1 wird die aushärtbare Masse von aussen durch eine spezielle Unterlegscheibe hindurch in das Loch injiziert. Gemäss der Europäischen Patentanmeldung mit dem Anmeldeaktenzeichen 16150747.0 wird die aushärtbare Masse an einer Auspressscheibe vorgesehen, durch welche der Ankerbolzen des Ankers hindurchgeführt ist. Die aushärtbare Masse wird dann durch Anziehen der Ankermutter am Anker zwischen Auspressscheibe und Anbauteil ausgepresst.

US20060110238 A1 beschreibt ein System mit einem elastischen Körper, das sich nachspannt, wodurch ein Lösen von Schrauben verhindert werden soll.

Aufgabe der Erfindung ist es, ein Verfahren zum Installieren eines Ankers und eine Einheit, insbesondere zur Verwendung in solch einem Verfahren, anzugeben, die bei besonders hoher Anwenderfreundlichkeit und Zuverlässigkeit besonders gute Ankerleistungen erlauben.

Die Aufgabe wird erfindungsgemäss durch ein Verfahren mit den Merkmalen des Anspruchs 1 und eine Einheit mit den Merkmalen des Anspruchs 5 gelöst. Bevorzugte Ausführungsformen sind in den abhängigen Ansprüchen angegeben.

Ein erfindungsgemässes Verfahren ist dadurch gekennzeichnet, dass die Dämpferhülse mittels Klebstoff mit dem Anbauteil verklebt wird. Hierbei wird die Dämpferhülse am Anbauteil fixiert.

Ein Grundgedanke der Erfindung kann darin gesehen werden, die Dämpferhülse mit dem Anbauteil zumindest mittelbar oder auch unmittelbar zu verkleben, insbesondere mittels Klebstoff, welcher in einer Einheit mit der Dämpferhülse geliefert wird. Es hat sich in überraschender Weise gezeigt, dass es bei Belastung eines bedämpften Ankers unter Umständen zu einem radialen Verrutschen der Dämpferhülse am Anbauteil kommen kann, was wiederum die Leistungsfähigkeit der Dämpferhülse und damit des Ankers unerwünscht beeinflussen kann. Durch das erfindungsgemäss vorgesehene Verkleben kann dieses Verrutschen unterbunden werden, so dass ein besonders leistungsfähiger Anker erhalten werden kann. Zugleich ist die erfindungsgemäss vorgesehene Installation mittels Verkleben besonders einfach durchführbar. So ist es, im Gegensatz zu eingesenkt angeordneten Dämpferhülsen, beispielsweise nicht erforderlich, das Anbauteil mit einer Aufnahmebohrung für die Dämpferhülse zu versehen. Darüber hinaus ist, im Gegensatz zu eingesenkt angeordneten Dämpferhülsen, nach der Erfindung eine Installation auch dann einfach möglich, wenn der Ankerbolzen nicht exakt koaxial im Durchgangsloch im Anbauteil angeordnet ist. Die Erfindung ist somit insbesondere für solche Anordnungen geeignet, bei denen ein und dasselbe Anbauteil mit mehreren Ankern fixiert wird. Im Falle mehrerer Anker kann die Koaxialität eines Ankerbolzens nämlich regelmässig nicht einfach durch Verschieben des Anbauteils hergestellt werden, denn dieses Verschieben hat meistens den Verlust der Koaxialität der anderen Ankerbolzen zur Folge. Wird der zum Verkleben verwendete Klebstoff dann noch in einer erfindungsgemässen Einheit zusammen mit der Dämpferhülse geliefert, kann die Installation nochmals vereinfacht werden, da keine zusätzlichen Klebstoffbehälter vorgehalten werden müssen.

Die Dämpferhülse ist zweckmässigerweise dafür vorgesehen, Bewegungsenergie, insbesondere Bewegungsenergie einer Radialbewegung des Ankerbolzens, zu dissipieren, das heisst in thermische Energie umzuwandeln. Die Dämpferhülse weist vorzugsweise zumindest ein aus Elastomer, beispielsweise aus Gummi, bestehendes Element auf, insbesondere eine aus Elastomer besehende Elastomerhülse, welche um den Ankerbolzen angeordnet wird.

Unter einem Verklebevorgang kann in fachüblicher Weise insbesondere das Herstellen einer Verbindung durch Flächenhaftung und innere Festigkeit des Klebstoffs verstanden werden.

Der Klebstoff kann beispielsweise mittels eines Klebstoffdispensers zwischen Dämpferhülse und Anbauteil eingebracht werden. Besonders bevorzugt ist es jedoch, dass zumindest ein Klebstoffreservoir zwischen der Dämpferhülse und dem Anbauteil zusammengepresst wird und hierbei Klebstoff aus dem zumindest einen Klebstoffreservoir ausgepresst wird, mittels welchem die Dämpferhülse mit dem Anbauteil verklebt wird. Demgemäss kann der Klebstoff sozusagen automatisch während des Installationsverfahrens freigesetzt werden, was die Anwenderfreundlichkeit und die Zuverlässigkeit noch weiter verbessern kann.

Zweckmässigerweise kann eine Einheit, welche die Dämpferhülse und das zumindest eine Klebstoffreservoir aufweist, und bei welcher das Klebstoffreservoir an der Dämpferhülse fixiert ist, vorgesehen werden, und die Einheit auf den Ankerbolzen aufgesteckt werden. Gemäss dieser Ausgestaltung bilden das Klebstoffreservoir mit dem Klebstoff und die Dämpferhülse ein Gebinde, und der Klebstoff wird in besonders einfacher und zuverlässiger Weise beim Anbringen der Dämpferhülse am Anker zur vorgesehenen Klebestelle gebracht, was das Verfahren noch weiter vereinfachen und die Zuverlässigkeit noch weiter steigern kann. Insbesondere ist ein System gegeben, welches einfach auf den Anker gesteckt werden kann. Das vorgeschlagene Verfahren kann sich durch dessen Einfachheit auszeichnen, denn die Einheit bestehend aus Dämpferhülse, Klebstoffreservoir mit Klebstoff und vorzugsweise auch einer Auspressscheibe und/oder Mischelementen, kann in einem einzigen Vorgang angebracht werden.

Eine weitere bevorzugte Ausgestaltung der Erfindung liegt darin, dass Klebstoff, insbesondere aus dem Klebstoffreservoir, zum zumindest bereichsweisen Ausfüllen des Durchgangslochs im Anbauteil und vorzugsweise auch zum zumindest bereichsweisen Ausfüllen des Lochs im Basisteil, in das Durchgangsloch beziehungsweise in das Loch eingebracht wird. Gemäss dieser Ausgestaltung wird mit derselben Klebstoffmenge, die zum Fixieren der Dämpferhülse am Anbauteil verwendet wird, auch der Spalt zwischen Ankerbolzen und Anbauteil, sowie vorzugsweise auch zwischen Ankerbolzen und Basisteil verfüllt. Hierdurch können die Vorteile der Verfüllung und der Dämpferhülse in besonders einfacher Weise kombiniert werden.

Eine erfindungsgemässe Einheit kann insbesondere zur Verwendung in einem erfindungsgemässe Verfahren vorgesehen sein. Sie weist eine Dämpferhülse und zumindest ein an der Dämpferhülse fixiertes, insbesondere unversehrtes Klebstoffreservoir, welches Klebstoff enthält, auf. Zusätzlich kann die Einheit beispielsweise noch eine Auspressscheibe mit Mischelementen aufweisen, die zwischen Klebstoffreservoir und Dämpferhülse angeordnet ist. Die Dämpferhülse kann in der Einheit beispielsweise durch Verkleben und/oder Vulkanisieren mit dem Klebstoffreservoir oder der Auspressscheibe verbunden sein. Die Einheit kann insbesondere eine Vorrichtung aufweisen wie sie in der Europäischen Patentanmeldung mit dem Anmeldeaktenzeichen 16150747.0 beschrieben ist.

Die Erfindung betrifft auch ein Befestigungsset bestehend aus einer erfindungsgemässen Einheit und einem Anker mit einem Ankerbolzen, wobei die Dämpferhülse der Einheit zum Aufnehmen und Bedämpfen des Ankerbolzens ausgebildet ist, also die Einheit in Kombination mit dem zugehörigen Anker.

Merkmale, die im Zusammenhang mit dem erfindungsgemässen Verfahren erläutert werden, können auch bei der erfindungsgemässen Einheit und der erfindungsgemässe Befestigungsanordnung zum Einsatz kommen, so wie auch umgekehrt Merkmale, die im Zusammenhang mit der erfindungsgemässen Einheit oder der erfindungsgemässe Befestigungsanordnung erläutert werden, auch beim erfindungsgemässen Verfahren zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figuren 1 und 2:: aufeinanderfolgende Stadien bei der Durchführung einer Ausführungsform des erfindungsgemässen Verfahrens, wobei die dabei verwendeten Elemente in Längsschnittansicht gezeigt sind;
- Figur 3:: eine grob schematische Darstellung einer Einheit, insbesondere zur Verwendung in einem Verfahren gemäss Figuren 1 und 2; und

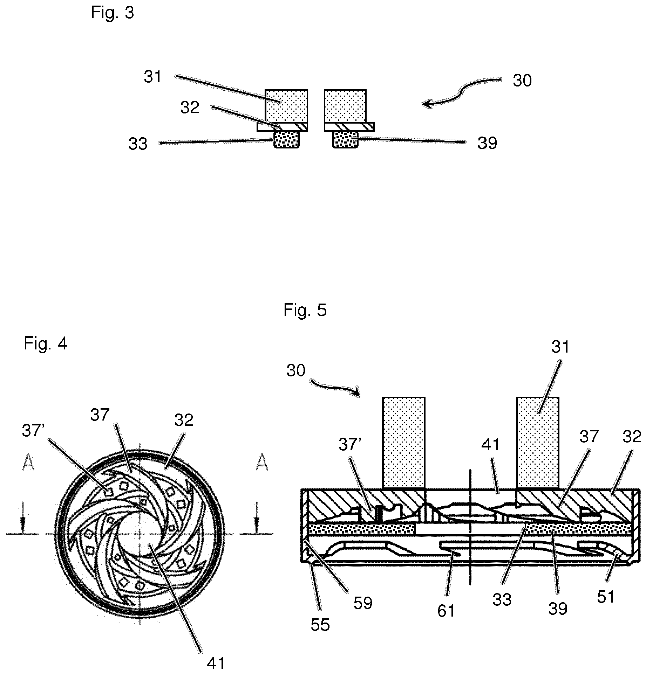

- Figuren 3 und 4:: eine mögliche Detailausgestaltung der Einheit aus Figur 3, in Figur 4 von unten ohne Dichtungsscheibe und in Figur 4 in Längsschnittansicht (A-A in Figur 3).

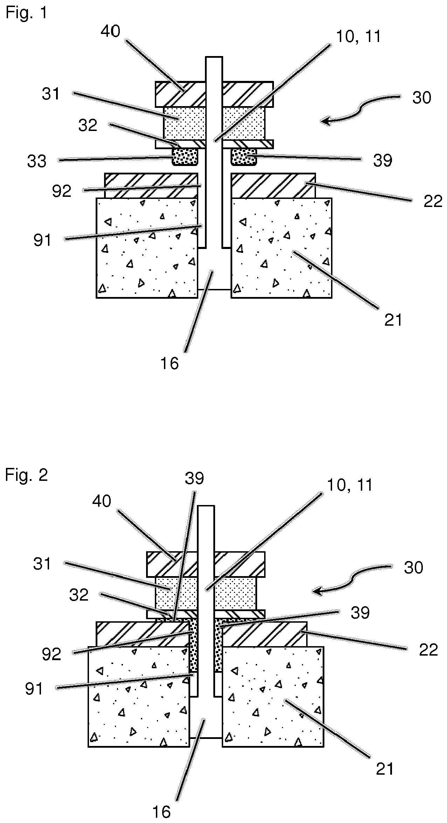

Die Figuren 1 und 2 zeigen aufeinanderfolgende Stadien bei der Durchführung eines erfindungsgemässen Verfahrens zum Installieren eines Ankers 10, der zum Befestigen eines Anbauteils 22 an einem Basisteil 21 vorgesehen ist.

Das Anbauteil 22 und das Basisteil 21 werden so zueinander positioniert, dass ein im Anbauteil 22 vorgesehenes Durchgangsloch 92 ein im Basisteil 21 vorgesehenen Loch 91 überlappt, und ein Ankerbolzen 11 des Ankers 10 wird in den überlappenden Löchern 91 und 92 angeordnet. Der Anker 10 weist im vorderen Bereich des Ankerbolzens 11 einen Ankerbereich 16 auf, der zum Verankern des Anker 10 im Loch 91 des Basisteils 21 vorgesehen ist. Bei einem beispielsweise als Spreizanker ausgeführten Anker 10 kann der Ankerbereich 16 ein Spreizbereich sein, der Zugkräfte im Ankerbolzen 11 in radiale Expansionskräfte umwandelt. Der rückwärtige Bereich des Ankerbolzens 11 steht auf der dem Basisteil 21 abgewandten Rückseite des Anbauteils 22 aus dem Anbauteil 22 hervor.

In dem in Figur 1 gezeigten ersten Verfahrensschritt wird die in Figur 3 gezeigte Einheit 30 auf den rückwärtigen Bereich des Ankerbolzens 11 aufgesteckt. Die Einheit 30 weist eine Dämpferhülse 31, zumindest ein an der Dämpferhülse 31 befestigtes Klebstoffreservoir 33 enthaltend Klebstoff 39 und eine Auspressscheibe 32 zum Auspressen des Klebstoffs 39 aus dem Klebstoffreservoir 33 auf.

Die Dämpferhülse 31 ist rückseitig an der Auspressscheibe 32 befestigt und das Klebstoffreservoir 33 ist vorderseitig an der Auspressscheibe 32 befestigt. Somit ist das Klebstoffreservoir 33 mittelbar, nämlich über die Auspressscheibe 32 hinweg, an der Dämpferhülse 31 befestigt. Vorzugsweise kann die Dämpferhülse 31 stoffschlüssig mit der Auspressscheibe 32 verbunden sein, beispielsweise kann die Dämpferhülse 31 an die Auspressscheibe 32 anvulkanisiert sein.

Grundsätzlich sind für das Verfahren auch andere Ausgestaltungen der Einheit 30 denkbar, insbesondere auch solche ohne Auspressscheibe 32, bei denen das Klebstoffreservoir 33 unmittelbar an der Dämpferhülse 31 befestigt ist, oder solche mit zusätzlichen Elementen zwischen Dämpferhülse 31 und Klebstoffreservoir 33. Im erfindungsgemässen Verfahren sind auch Ausgestaltungen denkbar, bei denen die Dämpferhülse 31, das Klebstoffreservoir 33 und die gegebenenfalls vorhandene Auspressscheibe 32 keine Einheit 30 bilden, sondern bei denen diese Elemente erst am Ankerbolzen 11 in Kontakt miteinander gebracht werden.

Beim Aufstecken der Einheit 30 auf den Ankerbolzen 11 wird der Ankerbolzen 11, vorzugsweise durch die Auspressscheibe 32 hindurch, in die Dämpferhülse 31 eingesteckt, so dass die Dämpferhülse 31 den Ankerbolzen 11 ringartig umgibt. Nach dem Aufstecken ist das Klebstoffreservoir 33 der Dämpferhülse 31 vorgelagert, befindet sich also zwischen dem Anbauteil 22 und der Dämpferhülse 31. Auf den Ankerbolzen 11 wird sodann noch eine Ankermutter 40 aufgeschraubt, so dass sich die Einheit 30 zwischen der Ankermutter 40 und dem Anbauteil 22 befindet. Der resultierende Zustand ist in Figur 1 dargestellt.

Sodann wird die Einheit 30, vorzugsweise durch Festziehen der Ankermutter 40, an das Anbauteil 22 angepresst und hierbei das Klebstoffreservoir 33 zwischen der Dämpferhülse 31 mit der Auspressscheibe 32 einerseits und dem Anbauteil 22 andererseits zusammengepresst. Hierbei tritt Klebstoff 39 aus dem Klebstoffreservoir 33 aus und bewirkt eine unmittelbare Verklebung zwischen Auspressscheibe 32 und Anbauteil 22 und somit eine mittelbare Verklebung zwischen Dämpferhülse 31 und Anbauteil 22. Aufgrund dieser Verklebung ist die Dämpferhülse 31 nun am Anbauteil 22 fixiert und kann insbesondere nicht radial am Anbauteil 22 verrutschen. Der resultierende Zustand ist in Figur 2 gezeigt. Da die Auspressscheibe 32 wie ein Kolben auf das Klebstoffreservoir 33 wirkt, kann die Auspressscheibe 32 auch als Kolbenscheibe bezeichnet werden.

Wie Figur 2 zeigt, kann auch vorgesehen werden, dass Klebstoff 39 aus dem Klebstoffreservoir 33, vorzugsweise beim Auspressen des Klebstoffreservoirs 33, in das Durchgangsloch 92 im Anbauteil 22 und vorzugsweise auch in das Loch 91 im Basisteil 21 gelangt, wo der Klebstoff 39 den Ringspalt, welcher den Ankerbolzen 11 umgibt, ausfüllen kann. Dies kann das Querkraftverhalten noch weiter verbessern.

Die Figuren 4 und 5 zeigen eine mögliche Detailausführung der Einheit 30 aus Figur 3. Wie die Figuren 4 und 5 zeigen, weist die Auspressscheibe 32 eine Durchgangsöffnung 41 für den Ankerbolzen 11 auf. Der Auspressscheibe 32 vorgelagert ist das Klebstoffreservoir 33, welches beispielsweise ein Folienbeutel sein kann, und welches eine Menge Klebstoff 39 enthält. Das Klebstoffreservoir 33 ist beispielsweise ringförmig ausgebildet und umgibt den Ankerbolzen 11. Dem Klebstoffreservoir 33 vorgelagert ist eine Dichtungsscheibe 51, welche ebenfalls eine Durchgangsöffnung 61 für den Ankerbolzen 11 aufweist. Das Klebstoffreservoir 33 befindet sich also zwischen der Auspressscheibe 32 und der Dichtungsscheibe 51, wobei bei der Installation die Einheit 30 so angeordnet wird, dass die Auspressscheibe 32 der Ankermutter 40 und die Dichtungsscheibe 51 dem Basisteil 21 und dem Anbauteil 22 zugewandt ist. Die Dichtungsscheibe 51 weist auf ihrer der Auspressscheibe 32 und dem Klebstoffreservoir 33 abgewandten Vorderseite eine Dichtlippe 55 für das Anbauteil 22 und auf ihrer der Auspressscheibe 32 zugewandten Rückseite eine Dichtungshülse 59 auf, in welcher die Auspressscheibe 32 verschiebbar angeordnet ist, und welche das Reservoir 33 in radialer Richtung abdichtet. Die Auspressscheibe 32 weist Mischkörper 37 und 37' auf, welche von der Auspressscheibe 32 zum Klebstoffreservoir 33 hin vorstehen. Die Mischkörper 37 sind zapfenförmig und die Mischkörper 37' bogenförmig ausgebildet. Die Mischkörper 37 und 37' bilden zusammen eine komplexe Geometrie, die eine besonders gute Vermischung der aushärtbaren Masse gewährleistet.

## Patentansprüche

1. Verfahren zum Installieren eines Ankers (10) zum Befestigen eines Anbauteils (22) an einem Basisteil (21), bei dem
- ein Ankerbolzen (11) des Ankers (10) in einem im Basisteil (21) vorgesehenen Loch (91) und in einem im Anbauteil (22) vorgesehenen Durchgangsloch (92) angeordnet wird, und
- eine Dämpferhülse (31) so am Ankerbolzen (11) angeordnet wird, dass die Dämpferhülse (31) den Ankerbolzen (11) umgibt,
**dadurch gekennzeichnet,**
**dass** die Dämpferhülse (31) mittels Klebstoff (39) mit dem Anbauteil (22) verklebt wird.

2. Verfahren nach Anspruch 1,
**dadurch gekennzeichnet,**
**dass** zumindest ein Klebstoffreservoir (33) zwischen der Dämpferhülse (31) und dem Anbauteil (22) zusammengepresst wird und hierbei Klebstoff (39) aus dem zumindest einen Klebstoffreservoir (33) ausgepresst wird, mittels welchem die Dämpferhülse (31) mit dem Anbauteil (22) verklebt wird.

3. Verfahren nach Anspruch 2,
**dadurch gekennzeichnet,**
**dass** eine Einheit (30), welche die Dämpferhülse (31) und das zumindest eine Klebstoffreservoir (33) aufweist, und bei welcher das Klebstoffreservoir (33) an der Dämpferhülse (31) fixiert ist, vorgesehen wird, und dass die Einheit (30) auf den Ankerbolzen (11) aufgesteckt wird.

4. Verfahren nach einem der vorstehenden Ansprüche,
**dadurch gekennzeichnet,**
**dass** Klebstoff (39) zum zumindest bereichsweisen Ausfüllen des Durchgangslochs (92) im Anbauteil (22) in das Durchgangsloch (92) eingebracht wird.

5. Einheit (30), insbesondere zur Verwendung in einem Verfahren nach einem der vorstehenden Ansprüche, aufweisend eine Dämpferhülse (31) und zumindest ein an der Dämpferhülse (31) fixiertes Klebstoffreservoir (33), welches Klebstoff (39) enthält.

6. Befestigungsset bestehend aus einer Einheit (30) nach Anspruch 5 und einem Anker (10) mit einem Ankerbolzen (11), wobei die Dämpferhülse (31) der Einheit (30) zum Aufnehmen und Bedämpfen des Ankerbolzens (11) ausgebildet ist.
